# EUROPÄISCHE PATENTSCHRIFT

(11) **EP 4 148 926 B1**
(45) Veröffentlichungstag und Bekanntmachung des Hinweises auf die Patenterteilung: **02.10.2024**
(21) Anmeldenummer: 22193077.9
(22) Anmeldetag: 31.08.2022
(51) Int. Cl.: H02G 9/10, B60L 53/31

(54) **VERWENDUNG EINER GEHÄUSEVORRICHTUNG**
USE OF A HOUSING DEVICE
UTILISATION D'UN DISPOSITIF LOGEMENT

(30) Priorität: 10.09.2021 DE 102021123465; 08.06.2022 DE 102022114356
(43) Veröffentlichungstag der Anmeldung: 15.03.2023
(73) Patentinhaber: Hauff-Technik GmbH & Co. KG, 89568 Hermaringen (DE)
(72) Erfinder: Kurz, Ralf, 89537 Giengen (DE)
(74) Vertreter: König Szynka Tilmann von Renesse Patentanwälte Partnerschaft mbB München

(56) Entgegenhaltungen:
- KR-A- 20190 136 406
- US-A1- 2004 165 394
- US-A1- 2006 231 279
- US-A1- 2008 217 339
- US-A1- 2015 263 502
- US-B1- 7 030 315

## Beschreibung

Die vorliegende Erfindung betrifft die Verwendung einer Gehäusevorrichtung, die einen Hüllkörper und einen Montagekörper aufweist.

Aus der KR 2019 0136406 A ist ein Ladesäulenfundament bekannt, welches aus einer Basis mit einem Flansch und einem Aufsatz besteht.

Aus der US 2015/263502 A1 ist ein Unterflurgehäuse mit Vandalismusschutz bekannt. Bei diesem wird ein Deckel mittels einer Klammer an einem Gehäuse befestigt.

Aus der US 2004/165394 A1 ist ein Montagesystem für Straßenlaternen bekannt, welches aus einem Rohr, einer Anschlussdose und einer darauf angeordneten Straßenlaterne besteht.

Aus der US 2008/217339 A1 ist ein unterirdisches Zählergehäuse aus Polymerbeton bekannt, welches aus mehreren Seitenwänden, einem an den Seitenwänden angegossenen Kragen sowie einem darauf angeordneten Deckel besteht.

Aus der US 7 030 315 B1 ist eine unterirdische Versorgungsbox mit Gehäuse, einem daran angeordneten Ring und einem Deckel bekannt.

Aus der US 2006/231279 A1 ist ein im wesentlichen rechteckiges Bodengehäuse bekannt, welches aus parallel angeordneten Seitenwänden mit einem auf der Oberseite angeordneten umlaufenden Rand sowie zwei darauf angeordneten Deckelabschnitten besteht. Wahlweise kann auf einem der Deckelabschnitte ein Kunststoffgehäuse angeordnet sein, in welchem Lichtwellenleiter mittels Spleißverbindungen miteinander verbunden und fixiert werden.

Der vorliegend in Rede stehende Hüllkörper begrenzt einen Innenraum, weist also bspw. bezogen auf seine Ausrichtung im eingebauten Zustand eine Seitenwand auf. Dieser Innenraum kann im Zuge der Verwendung zum Hindurchverlegen einer Medienleitung bzw. auch zum temporären Ablegen eines Leitungsendes bei einer Vormontage genutzt werden. Zur Illustration vorab, der Hüllkörper kann bspw. bei der Erschließung einer Außenanlage oder einer Verkehrsfläche, wie z. B. einer Einfahrt oder insbesondere eines Parkplatzes, in den Boden eingebaut werden.

Der vorliegenden Erfindung liegt das technische Problem zugrunde, eine vorteilhafte Verwendung bzw. Gehäusevorrichtung als Gegenstand der Verwendung anzugeben.

Dies wird erfindungsgemäß mit der Verwendung nach Anspruch 1 gelöst. Die entsprechende Gehäusevorrichtung weist zusätzlich zu dem den Innenraum begrenzenden Hüllkörper einen Montageträger auf, der zumindest in einem Montagebereich eine Dicke von mindestens 1 cm hat. Ist die Gehäusevorrichtung in den Boden eingebaut, so ist der Montageträger über dem vom Hüllkörper begrenzten Innenraum angeordnet. Der eingebaute Hüllkörper kann bspw. seitlich von Bodenmaterial, z. B. Schüttgut oder auch Beton, eingefasst sein, wobei der Montageträger dann im Wesentlichen bündig mit der Oberkante des Bodenaufbaus liegt (bspw. um nicht mehr als 5 cm, 3 cm oder 1 cm nach unten oder oben versetzt, oder auch bündig).

Mit der Kombination aus Hüllkörper und Montageträger wird einerseits in Form des Innenraums ein Zugangspunkt geschaffen, der für die Leitungsverlegung und zugeordnete Tätigkeiten (Anbindung über Leerrohr etc.) genutzt werden kann; andererseits wird mit dem Montageträger zugleich eine Befestigungsmöglichkeit für nachgelagerte Installationsarbeiten bereitgestellt, und es wird im Zuge der weiteren Verwendung oberseitig auf dem Montageträger ein Befestigungskörper angebracht, bspw. ein Sockel bzw. Sockelteil. Dieser Befestigungskörper kann dann später den eigentlichen Medienverbraucher bzw. -verbraucheranschluss tragen, bspw. eine Ladestation für Elektrofahrzeuge. Dabei erfolgt deren Verkabelung über den Innenraum des Hüllkörpers, es sind also sowohl die Anschlussarbeiten (Zugangspunkt) als auch die Befestigung vergleichsweise einfach und schnell zu bewerkstelligen. Dies gilt im Allgemeinen selbstverständlich auch unabhängig vom spezifischen Verbraucher, es ließe sich bspw. ebenso eine Wegleuchte oder Ähnliches auf dem Montageträger montieren (und über den Innenraum anschließen).

Hinsichtlich der Befestigung auf dem Montageträger ist dessen vergleichsweise dicke Ausgestaltung von Vorteil, diese kann bspw. Stabilität schaffen (z. B. bezogen auf ein Verkippen gegenüber der Vertikalen). Bevorzugt wird der dick ausgeführte Montageträger dahingehend genutzt, dass erst vor Ort ein Loch in den Montageträger eingebohrt wird, in das dann eine Schraube zum Anschrauben des Montageträgers eingedreht wird, siehe unten im Detail. Der dicke Montageträger kann also auch Flexibilität schaffen, nämlich aufgrund seines Volumens letztlich eine Anpassung vor Ort an den spezifischen Befestigungskörper erlauben. Alternativ kann in dem dicken Montageträger auch ein Befestigungsmittel eingeformt sein (siehe unten im Detail), kann also in dem einen oder anderen Fall seine Stabilität von Vorteil sein.

Bevorzugte Ausgestaltungen finden sich in der gesamten Offenbarung und insbesondere in den abhängigen Ansprüchen, wobei bei der Darstellung der Merkmale nicht immer im Einzelnen zwischen Verwendungs- bzw. Verfahrens- oder auch Vorrichtungsaspekten unterschieden wird; jedenfalls implizit ist die Offenbarung hinsichtlich sämtlicher Anspruchskategorien zu lesen.

Der Montageträger hat eine Dicke von mindestens 1 cm, in der Reihenfolge der Nennung zunehmend bevorzugt mindestens 2 cm, 3 cm bzw. 5 cm. Mögliche Obergrenzen können bspw. bei höchstens 20 cm, 15 cm bzw. 12 cm liegen. Bezogen auf die Einbaulage wird die Dicke in der Vertikalrichtung genommen. Im Falle einer über den Montagebereich variierenden Dicke wird ein darüber gebildeter Mittelwert betrachtet, bevorzugt ist die Dicke über den Montagebereich jedoch konstant. Der Montagebereich kann, da er zum Anordnen unterschiedlicher Befestigungskörper ausgelegt ist, größer als der tatsächlich angesetzte Befestigungskörper sein. Er kann bspw. horizontal eine Fläche von mindestens 10 cm², 20 cm², 30 cm² bzw. 40 cm² einnehmen (mit möglichen Obergrenzen bei z. B. höchstens 1 m², 0,6 m², 0,4 m² bzw. 0,2 m²). Prinzipiell kann auch der gesamte Montageträger mit einer entsprechenden Dicke gefasst sein, er kann aber bspw. auch in Randbereichen etc. dünner ausgeführt sein.

Gemäß einer bevorzugten Ausführungsform ist das Montageträgermaterial Polymerbeton. Bei diesem dient Kunststoff als Bindemittel bzw. bildet eine Matrix, in welche ein Füllstoff eingebettet ist, bspw. auf Grundlage eines mineralischen Rohstoffs (z. B. Quarz, Basalt bzw. Granit). Der Anteil an Kunststoff kann dann auch im Verhältnis klein sein, bspw. in einem Bereich zwischen 5 Gew.-% und 15 Gew.-% am Polymerbeton liegen. Der Montageträger aus Polymerbeton kann vergleichsweise stabil sein, und dem Monteur kann damit gewissermaßen ein Sockel zur Verfügung gestellt werden, der einem vor Ort betonierten Sockel vergleichbar ist. Der Schulungs- bzw. Gewöhnungsaufwand ist also nicht allzu groß, der Monteur kann den Befestigungskörper montieren, so wie er es von einem betonierten Sockel kennt. Wird das Loch vor Ort eingebracht, kann der Polymerbeton jedoch bspw. im Vergleich zu konventionellem Beton weniger rissträchtig und damit beschädigungsgefährdet sein (Abplatzer etc.).

Gemäß der Erfindung ist ein Abschnitt des Hüllkörpers in den Montageträger eingeformt. Bspw. bezogen auf die Einbaulage ist dies ein oberer Abschnitt des Hüllkörpers, steht also ein unterer Abschnitt davon nach unten aus dem Montageträger hervor. Aufgrund des Einformens können der Hüllkörper und der Montageträger bspw. aus unterschiedlichen Materialien vorgesehen sein, bspw. der Hüllkörper aus Kunststoff und der Montageträger aus einem Betonmaterial, insbesondere Polymerbeton (siehe oben). Da der Hüllkörper seitlich vom Bodenmaterial eingefasst wird (dieses am Hüllkörper anliegt), ist er dann ohnehin stabilisiert und gestützt. Der bspw. aus Polymerbeton vorgesehene Montageträger schafft hingegen sicheren Halt für den Befestigungskörper, wobei sich z. B. in Kombination mit dem Kunststoff-Hüllkörper noch immer ein hinsichtlich Transport und Handhabung beim Einbau in den Boden akzeptables Gewicht erreichen lässt (z. B. verglichen mit einem Voll-Betonteil).

Entsprechend der Erfindung ist der eingeformte Hüllkörper formschlüssig im Montageträger gehalten, und zwar bezogen auf die vertikale Richtung in Einbaulage. Dies schafft zusätzliche Stabilität, was z. B. bei vertikal größeren Aufbauten auf dem Montageträger (Stehlen, Säulen etc., siehe unten) in Anbetracht der Hebelmomente von Vorteil sein kann. Mit dem Formschluss gibt es eine Hinterschneidung bzgl. der vertikalen Richtung, ein Bereich des Hüllkörpers, bspw. eine Erhebung/Rippe (siehe unten), wird also nach vertikal unten und bevorzugt auch vertikal oben von dem Montageträgermaterial eingefasst, vorzugsweise dem Polymerbeton.

Gemäß der Erfindung ist der Hüllkörper in Form eines Rohrs vorgesehen, dessen Rohrachse dann bspw. in Einbaulage im Wesentlichen vertikal ausgerichtet sein kann. Das Rohr kann bspw. einen Innendurchmesser von mindestens 15 cm, 20 cm, 25 cm bzw. 30 cm haben, wobei mögliche Obergrenzen (davon unabhängig) bspw. bei höchstens 70 cm, 60 cm bzw. 50 cm liegen können. Der Durchmesser ergibt sich dabei im Allgemeinen als Mittelwert aus größter und kleinster Erstreckung in einer zur Rohrachse senkrechten Ebene, was im bevorzugten Fall der Kreisgeometrie dem Kreisdurchmesser entspricht. In anderen Worten ist der Innenraum bevorzugt zylinderförmig und beziehen sich die vorstehenden Durchmesserangaben auf die Zylindermantelfläche (die von einer Innenmantelfläche des Hüllkörpers begrenzt wird).

Entsprechend der Erfindung ist der rohrförmige Hüllkörper an seiner der Rohrachse abgewandten Außenmantelfläche mit mehreren Erhebungen geformt (und dementsprechenden Vertiefungen dazwischen). Diese erstrecken sich jeweils um die Rohrachse umlaufend, besonders bevorzugt je Erhebung in sich geschlossen. Axial aufeinanderfolgend sind mehrere Erhebungen vorgesehen, bspw. mindestens 4, 6, 8 oder 10 Erhebungen (mit möglichen Obergrenzen bei z. B. höchstens 100, 80, 60, 40 bzw. 30 Erhebungen). Die Erhebungen sind bevorzugt in axialer Richtung äquidistant und/oder mit radial gleicher Höhe vorgesehen.

Im Allgemeinen kann die der Rohrachse zugewandte Innenmantelfläche der mit Erhebungen geformten Kontur folgen (also ebenfalls mit Erhebungen/Vertiefungen geformt sein), bevorzugt ist sie jedoch glatt ausgebildet, also in einem Axialschnitt betrachtet geradlinig. Ein solcher Hüllkörper kann bspw. in Form eines Ripprohres vorgesehen sein, das aufgrund der außenseitigen Rippen stabil und zugleich verhältnismäßig leicht ist. Alternativ lässt sich der außenseitig mit Erhebungen/Vertiefungen und innenseitig glatt vorgesehene Hüllkörper aber bspw. auch in Form eines Verbundwellrohres vorsehen.

Entsprechend der Erfindung ist der außenseitig mit Erhebungen vorgesehene Hüllkörper, insbesondere das Ripp- oder Verbundwellrohr, in den Montageträger eingeformt. Dabei ist in dem eingeformten Abschnitt zumindest eine Erhebung (bspw. Rippe) angeordnet, die entsprechend formschlüssig im Montageträgermaterial gehalten wird, also mit einem Hinterschnitt (siehe vorne im Detail).

Gemäß einer bevorzugten Ausführungsform ist an dem Montageträger ein Leerrohr befestigt, das sich von dem Montageträger weg nach unten in den Innenraum erstreckt. Durch das Leerrohr kann später eine Medienleitung verlegt werden, wobei die Befestigung am Montageträger Halt schafft und bspw. das Hindurchfädeln vereinfachen kann. Im Allgemeinen kann das Leerrohr bspw. auch mit einer Schelle an der Unterseite des Montageträgers befestigt sein, bevorzugt ist sie zur Befestigung jedoch in den Montageträger eingeformt. Dies kann z. B. den Herstellungsaufwand reduzieren, es können insbesondere im selben Arbeitsgang (Gussschritt) der Hüllkörper und das Leerrohr eingeformt werden.

Generell hat das Leerrohr bevorzugt eine gewellte Außenwandfläche, im Allgemeinen kann es als Spiralschlauch, bevorzugt jedoch als Wellrohr ausgeführt sein (bei Letzterem sind die Erhebungen/Vertiefungen jeweils umlaufend in sich geschlossen). Besonders vorteilhaft kann die gewellte Außenwandfläche hinsichtlich des Einformens sein, nämlich dann formschlüssig im Montageträgermaterial sitzen, also mit einer Hinterschneidung (vgl. die Anmerkungen zum Hüllkörper). Bevorzugt sind in den Montageträger mindestens zwei Leerrohre eingeformt, und bspw. nicht mehr als 5, 4 oder 3 Leerrohre, besonders bevorzugt genau 2. Damit kann der über den Befestigungskörper am Montageträger befestigte Medienverbraucher oder -verbraucheranschluss bspw. mit unterschiedlichen Medien versorgt werden, etwa Strom und Daten. Auch unabhängig von der spezifischen Nutzung später kann das bzw. können die Leerrohre bspw. jeweils einen Innendurchmesser von mindestens 1,5 cm bzw. 2,5 cm haben, mit möglichen Obergrenzen bei z. B. höchstens 8 cm, 6 cm bzw. 5 cm.

Im Allgemeinen kann sich das Leerrohr bspw. im Innenraum nach unten erstrecken und in einem Stecker bzw. Fitting enden, das in einer Wand des Hüllkörpers sitzt. Zur außenseitigen Verlängerung kann dann ein weiteres Leerrohr mit dem Stecker/Fitting zusammengesetzt werden, das im Boden verläuft. In bevorzugter Ausgestaltung ist jedoch in der Wand des Hüllkörpers eine Öffnung vorgesehen, durch welche sich das Leerrohr aus dem Innenraum nach außen erstreckt, jedenfalls im fertig montierten Zustand (bei in den Boden eingebauter Gehäusevorrichtung). Das dem Montageträger distale Ende des Leerrohrs kann bspw. während Transport und Lagerung noch im Innenraum angeordnet sein und dann vor Ort herausgenommen werden; alternativ kann es aber auch bereits werksseitig nach außen verlegt sein.

Ein sich außenseitig, also im fertig montierten Zustand im Bodenmaterial/Beton, erstreckender Abschnitt des Leerrohrs kann bspw. mindestens 5 cm, 10 cm bzw. 15 cm lang sein; wenngleich im Allgemeinen beliebige Längen denkbar sind, können Obergrenzen von z. B. höchstens 1 m, 0,8 m bzw. 0,5 m bevorzugt sein. Eine Begrenzung der Länge kann bspw. die Handhabung der Gehäusevorrichtung bei Transport und Bodeneinbau vereinfachen, es müssen z. B. beim Betonieren eines Sockels keine besonderen Überlängen aufwändig gewickelt und beiseite gebunden werden etc. In bevorzugter Ausgestaltung wird das Leerrohr dann vor Ort durch Ansetzen eines weiteren Leerrohrs verlängert, Letzteres kann dann im Boden zu einer Anschluss- oder Verteilerstelle verlegt werden.

Generell kann der Montageträger den Innenraum nach oben abdecken, etwa von einem Durchlass für Leitungen etc. abgesehen. Ein solcher Durchlass kann vorkonfektioniert, also bereits werksseitig vorgesehen sein, er kann aber andererseits auch erst vor Ort eingebracht werden. Im Falle der Vorkonfektionierung kann bspw. ein Stopfen, z. B. aus einem Elastomermaterial, den Durchlass verschlie-βen, bis dieser zur Leitungsverlegung genutzt wird. Ein solcher Durchlass kann eine Alternative zum eingeformten Leerrohr, im Allgemeinen aber auch in Kombination damit vorgesehen sein.

Gemäß einer bevorzugten Ausführungsform ist eine Leitungsdurchführung in den Montageträger eingegossen. Diese kann bspw. ein Rohrelement umfassen, an welches außenseitig das Montageträgermaterial (z. B. der Polymerbeton) grenzt und das innenseitig eine Durchlassöffnung freihält, über die der Innenraum des Hüllkörpers dann von oben zugänglich ist. Innenseitig kann das Rohrelement bevorzugt mit einer Aufnahme, etwa einem Gewinde oder einer Bajonettaufnahme, ausgestattet sein. Im Zuge der Leitungsverlegung kann in dieser Aufnahme ein Systemeinsatz mit einer Dichtung montiert werden, wobei die Dichtung dann gegen die hindurchgeführte Leitung dichtet. Dazu kann die Dichtung bspw. als Manschette zum Andrücken an die Leitung oder als Schrumpfschlauch ausgeführt sein. Bevorzugt ist auch der Systemeinsatz gegen das Rohrelement gedichtet, etwa mit einem umlaufenden Dichtring, sodass die montierte Leitung dann insgesamt gegen das Rohrelement der Leitungsdurchführung gedichtet ist.

In der Aufnahme des Rohrelements kann auch ein Blindverschluss angeordnet werden bzw. sein, der die Durchlassöffnung bspw. noch verschließt, wenn die Gehäusevorrichtung in den Boden eingebaut wird. Für das spätere Hindurchführen der Leitung lässt sich der Blindverschluss aufgrund der definierten Schnittstelle zum Rohrelement dann leicht herausnehmen, bevorzugt wird er dann gegen einen Systemeinsatz getauscht, siehe vorne.

Gemäß einer bevorzugten Ausführungsform ist in den Montageträger ein Erdleiter eingeformt, bspw. ein Runddraht oder ein Flachband oder auch eine sog. Erdleiterdurchführung. Unabhängig vom Aufbau im Einzelnen ist der eingeformte Erdleiter von oben, bspw. an einer Seitenfläche des Montageträgers oder vorzugsweise an dessen Oberseite, zugänglich; zugleich ist er von unten, insbesondere über den Innenraum zugänglich. Im Zuge der Montage der Gehäusevorrichtung kann dann von unten aus dem Erdreich kommend ein Erdleiteranschluss angeschlossen werden; von oben kann der Medienverbraucher bzw. -verbraucheranschluss angeschlossen werden, insbesondere eine Ladestation. Der eingeformte Erdleiter kann bspw. diese Anschlussarbeiten vereinfachen, zudem kann das Einformen in das Montageträgermaterial bspw. auch inhärent eine Isolierung schaffen.

Im Allgemeinen kann der Montageträger an seiner Oberseite bspw. auch mit einer Vielzahl Löchern vorkonfektioniert sein, in die dann vor Ort zum entsprechenden Befestigungskörper passend (seiner Bohrschablone entsprechend) eine oder mehrere Schrauben eingedreht werden können. In bevorzugter Ausgestaltung wird das bzw. werden die Löcher jedoch erst vor Ort in den Montageträger eingebracht, bevorzugt ist dieser hierbei bereits in den Boden eingebaut. Im Vergleich zum vorkonfektionierten Zustand kann der Montageträger dann oberseitig nur an der/den tatsächlich zur Befestigung notwendigen Stellen gelöchert sein, was bspw. in Verschmutzungshinsicht von Vorteil sein kann. Bevorzugt ist die Oberseite des Montageträgers, wenn die Gehäusevorrichtung in den Boden eingebaut wird, eine plane geschlossene Oberfläche, jedenfalls von einem etwaigen eingeformten Befestigungsmittel abgesehen (siehe unten im Detail).

Offenbart sein soll ferner eine Variante, die sich nicht in den erteilten Ansprüchen findet, bei welcher das Loch durch Bohren in den Montageträger eingebracht, also vor Ort gebohrt wird (z. B. bei bereits in den Boden eingebautem Hüllkörper). Bevorzugt werden sämtliche Löcher, die zur Montage des Befestigungskörpers mit einem Anker, bspw. Schrauben bzw. Gewindebolzen, belegt werden, vor Ort gebohrt. Im Vergleich zu dem alternativ möglichen Lochraster kann dies einen in der weiteren Anwendung weniger verschmutzungsträchtigen Montageträger ergeben. Generell kann die Oberseite des Montageträgers bevorzugt plan ausgeführt sein, was auch bezüglich der Kompatibilität zu unterschiedlichen Befestigungskörpern von Vorteil sein kann.

Gemäß einer bevorzugten Ausführungsform wird in das Loch vor Ort (z. B. bei bereits in den Boden eingebautem Hüllkörper) ein Dübel eingesetzt und wird die Schraube in dem bzw. in den Dübel eingedreht. Der Dübel kann sich im Allgemeinen auch an einer der Oberseite des Montagekörpers entgegengesetzten Unterseite verspreizen, kann also bspw. als Kippdübel (z. B. Federklappdübel) oder Hohlraum- bzw. Spreizdübel ausgeführt sein und in ein Durchgangsloch in dem Montageträger gesetzt werden. Bevorzugt verspreizt sich der Dübel jedoch zumindest auch an einer das Loch begrenzenden Mantelfläche, bevorzugt wird er in ein Sackloch eingesetzt (siehe oben). Der Dübel kann bspw. als Kunststoff-Spreizdübel ausgeführt sein, bspw. einen im Verhältnis zum Außendurchmesser der Schraube kleineren Innendurchmesser haben und beim Eindrehen der Schraube gegen die das Loch begrenzende Mantelfläche gepresst werden.

Die Verwendung eines Dübels kann im Vergleich zu einem direkten Eindrehen der Schraube, das im Allgemeinen auch möglich ist, bspw. auch dahingehend von Vorteil sein, dass sich damit ein standardmäßig mit dem Befestigungskörper geliefertes Befestigungsset, das bspw. auf eine Montage an einem Betonsockel gerichtet sein kann, verwenden lässt. Damit können insbesondere auch die herstellerseitig dem Befestigungskörper, also bspw. Leuchtenfuß, beigelegten Schrauben verwendet werden, sodass bspw. keine Probleme bezüglich unterschiedlicher Korrosionsbeständigkeit von Schraube und Befestigungskörper geschaffen werden.

Im Allgemeinen auch in Verbindung mit, bevorzugt jedoch alternativ zur Befestigung durch mechanisches Verspreizen kann ein Anker zur Befestigung des Befestigungskörpers auch in das Loch im Montageträger eingeklebt werden, also stoffschlüssig darin befestigt werden. Dabei wird das Loch bevorzugt vor Ort in den Montageträger eingebohrt, dann werden der Anker und der Montagekleber in das Loch eingebracht. Generell kann es sich bei Ersterem z. B. um eine Gewindestange oder Schraube mit Außengewinde handeln, was eine bessere Anlage des Klebstoffs ergeben und zugleich ein etwaiges späteres Herausdrehen ermöglichen kann.

Der Klebstoff kann bevorzugt auf Harzbasis vorgesehen sein, etwa als Vinylharz. Er kann entweder aus einer Kartusche über eine Düse, insbesondere Mischdüse, in das Loch eingebracht oder in Form einer Verbundankerpatrone in das Loch eingesetzt werden. Letztere kann in einem Volumenteil die Harzmischung und in einem anderen ein Härterpulver enthalten, bspw. in zwei ineinander gesetzten Rohren, insbesondere Glasrohren. Unabhängig vom Aufbau im Detail wird die Patrone in das Loch eingesetzt und mit dem Eindrehen, insbesondere schlagenden Eindrehen, des Ankers solchermaßen zerstört, dass es zu einer Durchmischung von Harz und Härter kommt. Die Patrone kann zusätzlich z. B. Quarzsand enthalten, der bspw. entstehende Glassplitter zermahlen und/oder die Durchmischung begünstigen kann.

Zusammengefasst wird das Loch bevorzugt vor Ort in den Montageträger eingebracht und wird darin ein Anker, insbesondere eine Schraube oder Gewindestange befestigt, entweder durch direktes Eindrehen oder bevorzugt durch Verspreizen in einem Dübel und/oder durch Verkleben.

Offenbart sein soll ferner eine Variante, die sich nicht in den erteilten Ansprüchen findet, bei welcher ein Befestigungsmittel in den Montageträger eingeformt ist, das an bzw. von dessen Oberseite zugänglich ist und der Befestigung des Befestigungskörpers dient. Im Allgemeinen kann das Befestigungsmittel bspw. auch eine Gewindestange sein, die nach oben hervorsteht; bevorzugt ist jedoch eine Gewindehülse in den Befestigungskörper eingeformt, in welche zur Befestigung des Befestigungskörpers dann von oben eine Schraube eingedreht wird. Die Gewindehülse kann bspw. an ihrem bezogen auf die Einbaulage unterem Ende mit einem Sicherungsstift oder Flansch versehen sein, sitzt also in allgemeinen Worten bevorzugt vertikal formschlüssig in dem Montagekörper. Mit mehreren in den Montagekörper eingeformten Gewindehülsen können dann bspw. gängige Lochraster abgedeckt werden.

In bevorzugter Ausgestaltung wird der Befestigungskörper über einen Adapter, etwa eine Adapterplatte aus z. B. Kunststoff oder Metall, an dem Montageträger montiert, wobei die Adapterplatte vorzugsweise an dem in den Montageträger eingeformten Befestigungsmittel befestigt wird. Damit lässt sich der Befestigungskörper auch dann montieren, wenn sein Rastermaß nicht zu dem in den Montageträger eingeformten Befestigungsmittel passt. Der Adapter kann bspw. auch aus Polymerbeton vorgesehen sein, was die Stabilität und Sockelfunktion weiter verbessern kann. Bevorzugt wird der Polymerbeton-Adapter auf einen Polymerbeton-Montageträger gesetzt, besonders bevorzugt werden diese beiden Polymerbetonkörper miteinander verklebt. Dieser Klebstoff kann bspw. auf Harzbasis vorgesehen sein, etwa als Vinylharz, und z. B. aus einer Kartusche über eine Düse/Mischdüse aufgebracht werden.

Der Polymerbeton-Adapter kann bspw. zusätzliche Dicke schaffen, sodass ein vor Ort eingebrachtes Loch dann tiefer gebohrt werden kann, was z. B. bei einer höheren Säule/Stehle von Interesse sein kann, also in allgemeinen Worten mit Blick auf ggf. größere Hebelmomente. In den Polymerbeton-Adapter kann alternativ oder zusätzlich auch ein Befestigungsmittel eingeformt sein, an dem dann der Befestigungskörper montiert wird, bspw. eine Gewindestange und/oder Gewindehülse (vgl. die vorstehenden Anmerkungen zum Montageträger). Der Polymerbeton-Adapter kann auf einem Montageträger ohne Vorkonfektionierung (ohne eingeformtes Befestigungsmittel) oder auch auf einem mit einem Befestigungsmittel ausgestatteten Montageträger montiert werden, wobei dieses Befestigungsmittel des Montageträgers bei der Montage des Polymerbeton-Adapters benutzt werden oder auch ungenutzt bleiben kann, etwa wenn der Polymerbeton-Adapter aufgeklebt wird.

Eine bevorzugte Ausführungsform betrifft den Einbau des Hüllkörpers in den Boden, wird nämlich ein unterer Abschnitt davon mit Beton umfüllt. Der Beton kann den Hüllkörper zwar im Allgemeinen auch über seine gesamte Höhe unterhalb des Montageträgers umschließen, bevorzugt ist jedoch ein Abschnitt frei davon, ist dort also kein Beton, sondern bspw. Schüttgut oder ein Oberflächenbelag angeordnet. Das (teilweise) Einbetonieren kann Stabilität schaffen, auch mit Blick auf die spätere Sockelfunktion; andererseits kann das Freilassen des oberen Abschnitts bspw. ein bündiges Anarbeiten der Oberkante des Bodens an den Montageträger erlauben (bspw. des Oberbodens oder eines Bodenbelags).

Über die Ladestation lässt sich ein elektrischer Verbraucher laden, etwa ein elektrisches Fahrzeug, wie z. B. ein Pkw oder auch Motorrad etc. Eine solche Ladestation kann bevorzugt zusätzlich über ein Datenkabel angeschlossen sein, etwas zur Zustandsüberwachung oder Abrechnung etc. Unabhängig von dem Verbraucher/Verbraucheranschluss im Einzelnen kann der Hüllkörper mit dem Innenraum bspw. die Leitungsverlegung vereinfachen, etwa ein Ablegen von Überlängen erlauben. Andererseits schafft der Montageträger Stabilität, kann das Gesamtsystem aus Hüllkörper und Montageträger dann also zugleich als Sockel dienen.

Die Medienleitung, die an den vom Befestigungskörper getragenen Verbraucheranschluss angeschlossen ist, kann an einen Verteilerkasten oder an ein Gebäude angeschlossen sein, also in letzterem Fall in dem Gebäude mit einem verbraucherseitigen Ende des entsprechenden Medienhausanschlusses verbunden sein. Der Medienhausanschluss kann bspw. eine Gebäudeeinführung umfassen, etwa eine Bodendurchführung, daran kann in Richtung des verbraucherseitigen Endes bspw. ein Zähler anschließen. Im Falle der Stromleitung kann deren gebäudeinnenseitiges Ende bspw. über einen Sicherungskasten an den Hausanschluss angeschlossen sein.

Gemäß einer bevorzugten Ausführungsform ist bzw. wird auf dem Montageträger eine Säule befestigt, die sich gegenüber dem Montageträger vertikal um mindestens 25 cm erhebt, in der Reihenfolge der Nennung zunehmend bevorzugt mindestens 40 cm, 50 cm, 60 cm, 70 cm bzw. 80 cm (mögliche Obergrenzen können z. B. bei höchstens 2 m bzw. 1,5 m liegen). Es kann entweder der Befestigungskörper selbst diese Säule bilden, er kann aber andererseits auch nur einen Sockel davon darstellen, der dann die eigentliche Säule trägt.

Offenbart sein soll ferner eine Variante, die sich nicht in den erteilten Ansprüchen findet, bei welcher bevorzugt im Zuge des Einbaus in den Boden ein Rammschutz an dem Montageträger montiert ist bzw. wird. Dies kann im Allgemeinen auch über den Befestigungskörper erfolgen, bevorzugt wird der Rammschutz jedoch gesondert am Montageträger befestigt, was eine gewisse Entkopplung schaffen kann. Bei einem Aufprall wird die eingetragene Kraft somit jedenfalls nicht unmittelbar in den Befestigungskörper eingeleitet, was einer Beschädigung des Medienverbrauchers bzw. -verbraucheranschlusses vorbeugen kann, bspw. einer an einem Parkplatz montierten Ladesäule im Falle eines Parkremplers. Der Rammschutz kann in einer vertikalen Aufsicht betrachtet seitlich gegenüber dem Montageträger überstehen, insbesondere kann er an einer Seitenfläche davon montiert sein.

In einem vertikalen Schnitt betrachtet liegt besagte Seitenfläche des Montageträgers gewinkelt, vorzugsweise senkrecht, zu der Oberseite, die den Befestigungskörper trägt. Ein Verschrauben des Rammschutzes an der Seitenfläche, bspw. durch eine in die Seitenfläche eingebrachte Bohrung, kann bspw. hinsichtlich der Stabilität im fertig in den Boden eingebauten Zustand von Vorteil sein. Der Montageträger ist nämlich bevorzugt zumindest teilweise versenkt (siehe vorne), wird also dann seitlich von einer Deckschicht des Bodenaufbaus eingefasst, bspw. Asphalt oder bevorzugt Pflastersteinen bzw. Platten. Dies schafft an sich mit Blick auf eine mögliche Krafteinwirkung Stabilität, zudem wird dann auch der an der Seite montierte Aufprallschutz seitlich eingefasst und zusätzlich stabilisiert.

Der Aufprallschutz weist bevorzugt einen, bezogen auf die Einbaulage, horizontalen Schenkel auf, der sich im montierten Zustand seitlich von dem Montageträger weg erstreckt. An einem dem Montageträger entgegengesetzten Ende des horizontalen Schenkels ist dann bevorzugt ein stehender Schenkel angeordnet, der sich z. B. um mindestens 30 cm, 40 cm, 50 cm bzw. 60 cm nach oben erstrecken kann (mögliche Obergrenzen können z. B. bei höchstens 1,5 m bzw. 1 m liegen). Im montierten Zustand steht der stehende Schenkel gegenüber der Oberkante des Bodenaufbaus hervor. Zwischen dem stehenden und dem horizontalen Schenkel ist bevorzugt eine Querstrebe vorgesehen, die besonders bevorzugt im Wesentlichen bis zum Montageträger reicht. Im Falle eines Aufpralls kann damit die Kraft zumindest anteilig nach unten geleitet werden, also bspw. in die "Ebene" des Bodenbelags, kann also bspw. der auf Höhe der eigentlichen Ladestation vernichtete Anteil kinetischer Energie zumindest verringert werden.

Offenbart, jedoch nicht beansprucht, ist ferner ein Verfahren zum Herstellen einer erfindungsgemäß verwendeten Gehäusevorrichtung, wobei der Abschnitt des Hüllkörpers (siehe vorne) in den Montageträger eingeformt wird. Es wird also der Hüllkörper als bestehendes Teil, bspw. in Form eines Ripprohrs, in den Montageträger eingegossen, der im Zuge dessen hergestellt wird.

In bevorzugter Ausgestaltung erfolgt dies mit fließfähigem Polymerbeton, wird also der Montageträger aus Polymerbeton gegossen und dabei der Hüllkörper eingeformt. Dazu kann der dann eingeformte Abschnitt des Hüllkörpers in eine Kavität eingebracht werden, die mit dem Polymerbeton aufgefüllt wird und dann den Montageträger freigibt. Bevorzugt kann dies eine nach vertikal oben offene Kavität sein, in der bzw. aus welcher sich der Hüllkörper nach vertikal oben erstreckt, sodass nach dem Gießen der Montageträger unten und der Hüllkörper oben angeordnet ist (die Vorrichtung wird also auf dem Kopf gegossen).

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können.

Im Einzelnen zeigt
- Figur 1: eine Gehäusevorrichtung mit Montageträger und Hüllkörper;
- Figur 2: die Montagevorrichtung gemäß Figur 1 in einem in den Boden eingebauten Zustand;
- Figur 3a, b: eine erste Möglichkeit zur Montage eines Befestigungskörpers an dem Montageträger der Gehäusevorrichtung gemäß Figur 1;
- Figur 4a-d: weitere Möglichkeiten zur Montage eines Befestigungskörpers an dem Montageträger einer Gehäusevorrichtung;
- Figur 5a, b: verschiedene Möglichkeiten zur Leitungsverlegung durch den Innenraum des Hüllkörpers einer Gehäusevorrichtung;
- Figur 6: eine Gehäusevorrichtung mit in den Montageträger eingeformten Leerrohren;
- Figur 7: eine Gehäusevorrichtung mit einem an dem Montageträger befestigten Aufprallschutz.

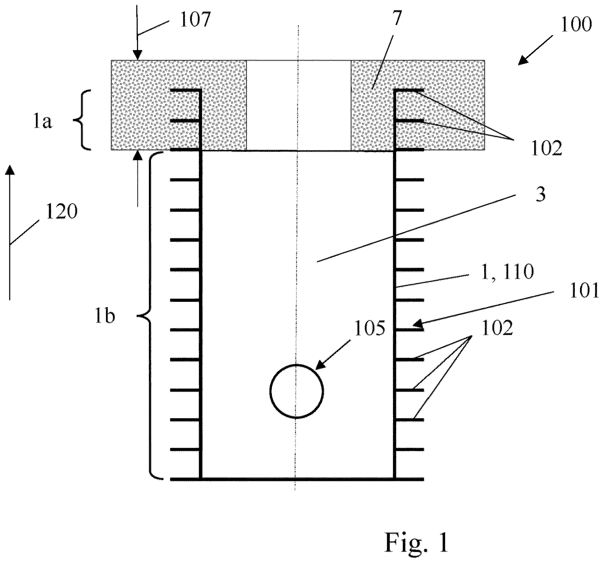

Figur 1 zeigt eine Gehäusevorrichtung 100, die einen Hüllkörper 1 und einen Montageträger 7 aufweist. Der Hüllkörper 1 begrenzt einen Innenraum 3 und weist an seiner dem Innenraum 3 abgewandten Außenmantelfläche 101 mehrere jeweils umlaufende Erhebungen 102 auf. Der Hüllkörper 1 ist vorliegend als, bezogen auf eine Vertikalrichtung 120, nach oben und unten offenes Ripprohr 110 vorgesehen.

Der Montageträger 7 ist aus Polymerbeton gegossen, wobei ein Abschnitt 1a des Hüllkörpers 1 in den Montageträger 7 eingeformt ist. In diesem Abschnitt 1a sind mehrere Erhebungen 102 angeordnet, was einen formschlüssigen Halt schafft. Ein unterer Abschnitt 1b des Hüllkörpers 1 steht nach unten aus dem Montageträger 7 hervor. Dieser Abschnitt 1b und der Innenraum 3 schaffen später einen Zugangspunkt im Boden (siehe unten im Detail), wobei der Montageträger 7 als Fundament dient und eine Befestigungsmöglichkeit schafft. Dazu ist er mit einer Dicke 107 vorgesehen, die im vorliegenden Beispiel bei rund 10 cm liegt.

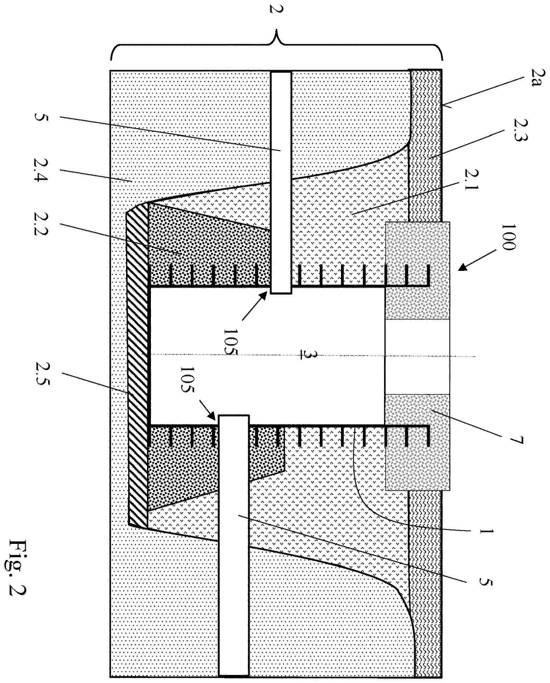

Figur 2 zeigt die Gehäusevorrichtung 100 gemäß Figur 1 in einem in den Boden 2 eingebauten Zustand. Ein Teil des unteren Abschnitts 1b des Hüllkörpers 1 ist mit Beton 2.2 umfüllt, darüber ist die Aushubstelle mit Schüttgut 2.1 aufgefüllt. Eine Oberkante 2a des Bodenaufbaus bildet ein Bodenbelag 2.3, bspw. ein Asphalt- oder Plattenbelag. Der Montageträger 7 ist in den Boden 2 eingebettet, er steht gegenüber der Oberkante 2a nur geringfügig hervor. Zu erkennen sind in der Darstellung ferner umgebendes Bodenmaterial 2.4, typischerweise Schotter, das bei dem Aushub stehen geblieben ist (bzw. zur Leerrohrverlegung nur in geringerem Umfang lokal abgetragen wurde). Ferner ist eine Sockelplatte 2.5 zu erkennen, auf welcher der Hüllkörper 1 und der Beton 2.2 aufsitzen. Dabei kann es sich bspw. um eine zuvor am Boden des Aushubs gegossene Betonschicht handeln, es kann aber bspw. auch vor dem Platzieren der Gehäusevorrichtung 100 eine Sockelplatte in die Aushubstelle eingelegt werden. Zu erkennen sind ferner zwei Leerrohre 5, die im Boden 2 verlaufen und in den Innenraum 3 münden. Entsprechende Öffnungen 105 im Hüllkörper 1 können vor Ort eingebracht oder vorkonfektioniert sein, vgl. auch Figur 1.

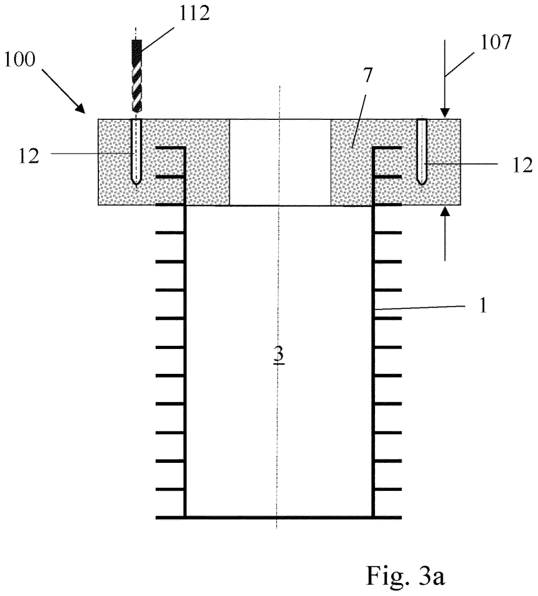

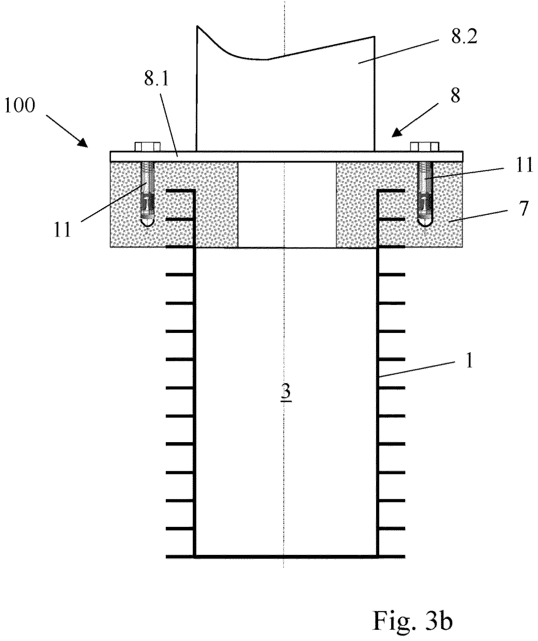

Die Figuren 3a, b illustrieren eine erste Möglichkeit zur Montage eines Befestigungskörpers 8 auf dem Montageträger 7. Dies erfolgt nach dem Einbau in den Boden, Letzterer ist jedoch der Übersichtlichkeit halber in den Figuren 3a, b nicht dargestellt. Nach dem Bodeneinbau werden vor Ort mit einem Bohrer 112 Löcher 12 in den Montageträger 7 eingebracht, wofür dieser aufgrund seiner Dicke 107 hinreichend stabil ist. Anschließend wird der Befestigungskörper 8 aufgesetzt, der vorliegend einen Bodenflansch 8.1 und eine Säule 8.2 umfasst. An der Säule ist bzw. wird dann eine Ladestation montiert, die Verkabelung erfolgt über den Innenraum 3. Der Befestigungskörper 8 wird über Schrauben 11 am Montageträger 7 befestigt, die bspw. als Schwerlastanker direkt eingedreht bzw. - gesetzt und verspreizt oder in zuvor eingesetzte Dübel eingeschraubt werden können.

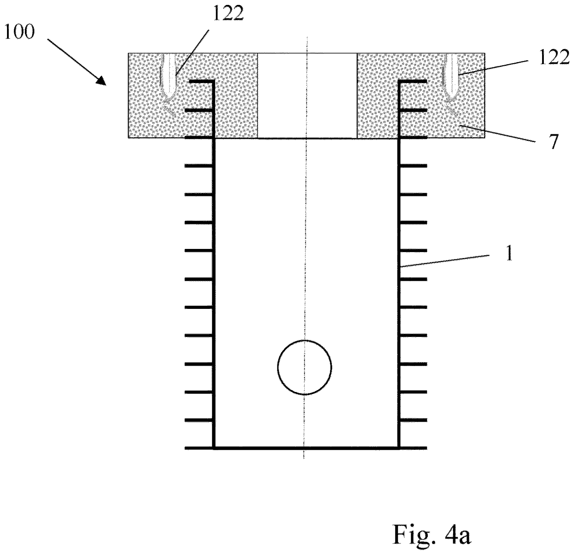

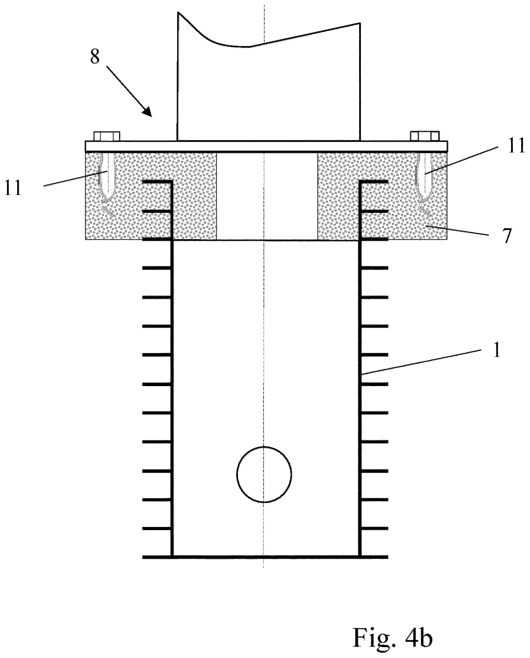

In den Montageträger 7 der Gehäusevorrichtung 100 gemäß Figur 4a sind Gewindehülsen 122 eingeformt. Diese werden beim Gießen des Montageträgers in die entsprechende Kavität für den Guss eingelegt (der Guss erfolgt "auf dem Kopf", also bei nach unten weisendem Montageträger 7). Im Unterschied zur Variante der Figuren 3a, b wird in diesem Fall der Montageträger 7 nicht vor Ort durch Bohren individueller Löcher 12 angepasst, sondern kann auf dem mit den Gewindehülsen 122 vorkonfektionierten Montageträger 7 direkt ein dazu passender Befestigungskörper 8 angeschraubt werden, vgl. Figur 4b.

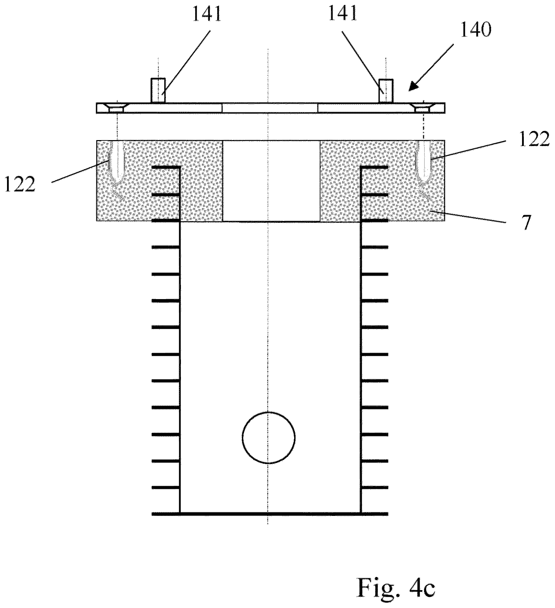

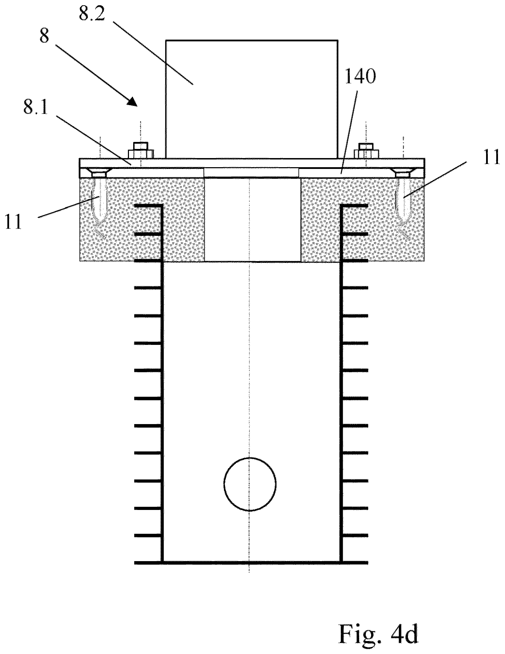

Die Figuren 4c, d illustrieren eine alternative Situation, in welcher der Befestigungskörper 8 nicht zu dem Rastermaß der Gewindehülsen 122 passt. In diesem Fall wird zunächst eine Adapterplatte 140 auf den Montageträger 7 aufgeschraubt, die eine zu den Gewindehülsen 122 passende Lochung hat. Ferner kann sie mit Gewindebohrungen (nicht dargestellt) oder Gewindestutzten 141 ausgestattet sein, über welche dann der Befestigungskörper 8 befestigt wird, vgl. Figur 4d.

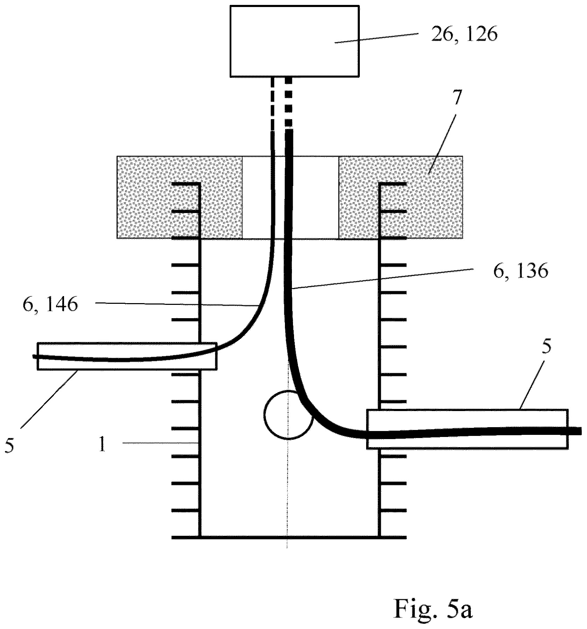

Figur 5a illustriert, von der Situation gemäß Figur 2 ausgehend, wie die Leerrohre 5 zur Verkabelung eines auf dem Montageträger 7 montierten Medienverbraucher oder Medienverbraucheranschlusses 26 genutzt werden können. Vorliegend handelt es sich um eine Ladestation 126 für Elektrofahrzeuge, die jedoch nur schematisch dargestellt ist (zudem ist in Figur 5a auch die Befestigung nicht gezeigt, insofern wird auf die vorstehenden Figuren verwiesen). Die Ladestation 126 ist über eine Medienleitung 6, nämlich ein Stromkabel 136 an das Stromnetz angebunden, ferner gibt es eine weitere Medienleitung 6, nämlich ein Datenkabel 146. Diese Medienleitungen 6 lassen sich durch den Innenraum 3 gut nachträglich verlegen, also nach dem Abschluss der Bodenarbeiten im Zuge der Montage des Befestigungskörpers etc.

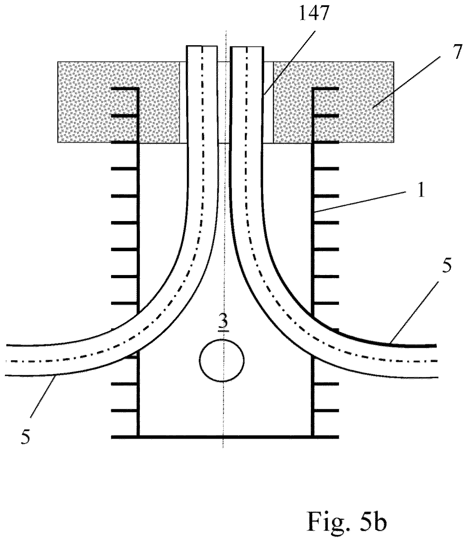

Figur 5b zeigt eine leicht abgewandelte Variante, bei welcher die Leerrohre 5 in dem Innenraum 3 weiter nach oben verlegt sind, also durch den Durchlass 147 im Montageträger 7 nach oben herausverlegt sind.

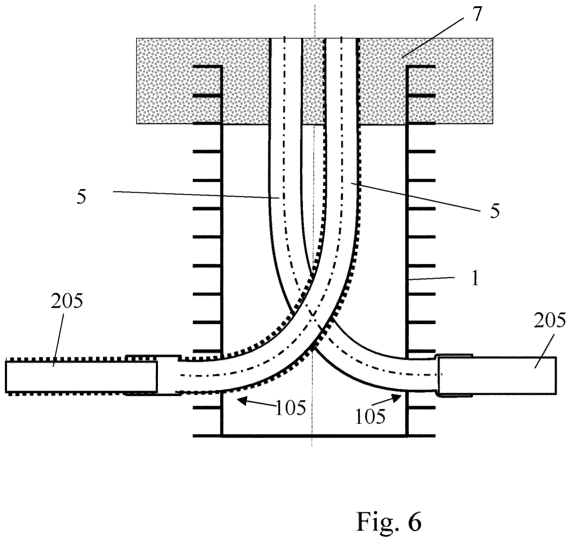

Bei der Variante gemäß Figur 6 sind die Leerrohre 5 am Montageträger 7 befestigt, nämlich in diesen eingeformt. Sie werden beim Gießen des Montageträgers 7 in der entsprechenden Kavität platziert und dann von dem fließfähigen Polymerbeton umschlossen. Damit sind sie zuverlässig im Montageträger 7 gehalten, was das Hindurchführen der Medienleitungen 6 vereinfachen kann. Durch entsprechende Öffnungen 105 im Hüllkörper 1 verlaufen die Medienleitungen 5 nach au-βen, dort können sie zur Verlängerung mit weiteren Leerrohren 205 zusammengesteckt werden.

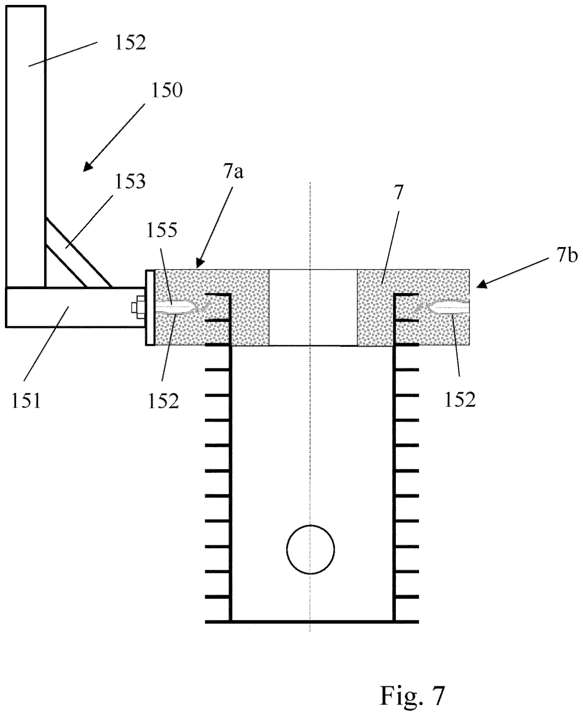

Bei der Gehäusevorrichtung 100 gemäß Figur 7 ist der Montageträger 7 mit Gewindehülsen 152 vorkonfektioniert, diese sind jedoch nicht an der Oberseite 7a des Montageträgers 7, sondern an dessen Seitenwand 7b angeordnet. Sie dienen der (optionalen) Befestigung eines Aufprallschutzes 150, der jedenfalls gegen Parkrempler etc. einen gewissen mechanischen Schutz bietet. Im Einzelnen wird ein horizontaler Schenkel 151 des Aufprallschutzes an der Seitenwand 7b verschraubt, darauf ist ein stehender Schenkel 152 angeordnet. Dieser ist über eine Querstrebe 153 schräg abgestützt, was zusätzliche Stabilität schafft. Die Befestigung am Montageträger 7 erfolgt über eine oder mehrere Schrauben 155. Der eigentliche Befestigungskörper (hier nicht dargestellt) kann an der Oberseite 7a dann z. B. gemäß den Figuren 3a, b befestigt werden.

## Patentansprüche

1. Verwendung einer Gehäusevorrichtung (100),
die einen Hüllkörper (1), der einen Innenraum (3) begrenzt, und
einen Montageträger (7) aufweist,
bei welcher Verwendung der Hüllkörper (1) in einem Außenbereich in einen Boden (2) eingebaut und durch den Hüllkörper (1) eine Medienleitung (6) verlegt wird,
wobei der Montageträger (7) auf dem Hüllkörper (1) angeordnet und ein Abschnitt (1a) des Hüllkörpers (1) in den Montageträger (7) eingeformt und bezogen auf eine vertikale Richtung (120) formschlüssig in dem Montageträger (7) gehalten ist,
wobei
der Hüllkörper (1) rohrförmig ist und an einer Außenmantelfläche (101) eine Mehrzahl jeweils umlaufende Erhebungen (102) aufweist,
**dadurch gekennzeichnet, dass**
in dem in den Montageträger (7) eingeformten Abschnitt (1a) mindestens eine der Erhebungen (102) angeordnet ist und den formschlüssigen Halt schafft, und an einer Oberseite (7a) des Montageträgers (7), welcher zumindest in einem Montagebereich eine Dicke von mindestens 1 cm hat, ein Befestigungskörper (8) an dem Montageträger (7) befestigt wird und mit dem Befestigungskörper (8) eine Ladestation (126) für Elektrofahrzeuge an dem Montageträger (7) befestigt wird, an welche die Medienleitung (6) angeschlossen ist oder wird.

2. Verwendung nach Anspruch 1, bei welcher der Montageträger (7) aus Polymerbeton vorgesehen ist.

3. Verwendung nach einem der vorstehenden Ansprüche, bei welcher ein Leerrohr (5) zur Leitungsverlegung an dem Montageträger (7) befestigt ist, vorzugsweise in den Montageträger (7) eingeformt ist, welches sich nach unten in den von dem Hüllkörper (1) begrenzten Innenraum (3) hineinerstreckt.

4. Verwendung nach einem der vorstehenden Ansprüche, bei welcher eine Leitungsdurchführung und/oder ein Erdleiter in den Montageträger eingeformt ist bzw. sind.

## Claims

1. Use of a housing apparatus (100),
which has a casing body (1) delimiting an interior space (3) and
a mounting support (7),
in which use the casing body (1) is installed in an outer region in a ground (2) and a media line (6) is laid through the casing body (1),
wherein the mounting support (7) is arranged on the casing body (1) and a portion (1a) of the casing body (1) is molded into the mounting support (7) and is held in a form-fitting manner in the mounting support (7) with respect to a vertical direction (120),
wherein the casing body (1) is tubular and has a plurality of respective circumferential projections (102) on an outer circumferential surface (101), **characterized in that**
at least one of the projections (102) is arranged in the portion (1a) molded into the mounting support (7) and creates the form-fitting hold, and on an upper side (7a) of the mounting support (7), which has a thickness of at least 1 cm at least in a mounting region, a fastening body (8) is fastened to the mounting support (7) and a charging station (126) for electric vehicles, to which the media line (6) is or will be connected, is fastened to the mounting support (7) by means of the fastening body (8).

2. Use according to claim 1, in which the mounting support (7) is provided from polymer concrete.

3. Use according to one of the preceding claims, in which an empty pipe (5) for laying lines is fastened to the mounting support (7), preferably is molded into the mounting support (7), which extends downwards into the interior space (3) delimited by the casing body (1).

4. Use according to one of the preceding claims, in which a line bushing and/or a ground conductor is or are molded into the mounting support (7).

## Revendications

1. Utilisation d'un dispositif formant boîtier (100), présentant :
un corps d'enveloppe (1) qui délimite un espace intérieur (3), et
un support de montage (7) ;
dans le cadre de laquelle utilisation le corps d'enveloppe (1) est installé en extérieur dans un sol (2) et un câblage (6) est posé à travers le corps d'enveloppe (1),
ledit support de montage (7) étant disposé sur le corps d'enveloppe (1) et une portion (1a) du corps d'enveloppe (1) étant intégrée par moulage dans le support de montage (7) et maintenue dans le support de montage (7) par complémentarité de forme par rapport à une direction verticale (120),
ledit corps d'enveloppe (1) étant tubulaire et présentant une pluralité de saillies (102) circonférentielles sur une surface de pourtour extérieure (101) ;
**caractérisé en ce qu'**au moins une des saillies (102) est disposée dans la portion (1a) intégrée par moulage dans le support de montage (7) et assure ledit maintien par complémentarité de forme, et un corps de fixation (8) est fixé au support de montage (7) sur une face supérieure (7a) dudit support de montage (7) qui présente, au moins dans une zone de montage, une épaisseur d'au moins 1 cm, ledit corps de fixation (8) permettant de fixer au support de montage (7) une borne de recharge (126) pour véhicules électriques à laquelle le câblage (6) est ou sera relié.

2. Utilisation selon la revendication 1, dans le cadre de laquelle le support de montage (7) est en béton polymère.

3. Utilisation selon l'une des revendications précédentes, dans le cadre de laquelle un tube creux (5) pour pose de câble est fixé au support de montage (7), de préférence intégré par moulage dans le support de montage (7), et s'étend vers le bas pour pénétrer dans la cavité (3) délimitée par le corps d'enveloppe (1).

4. Utilisation selon l'une des revendications précédentes, dans le cadre de laquelle une traversée de câble et/ou un conducteur de terre sont intégrés par moulage dans le support de montage.
